# EUROPEAN PATENT SPECIFICATION

(11) **EP 3 639 080 B1**
(45) Date of publication and mention of the grant of the patent: **13.12.2023**
(21) Application number: 18818678.7
(22) Date of filing: 15.06.2018
(51) Int. Cl.: G01N 1/30, G01N 33/543, G01N 33/53, G01N 33/574, G02B 21/34, G02B 1/14, G01N 21/25

(54) **PROCESS RECORD SLIDE FOR SPECIAL STAINING**
PROZESSAUFZEICHNUNGSOBJEKTTRÄGER ZUR SPEZIELLEN FÄRBUNG
LAME D'ENREGISTREMENT DE PROCESSUS POUR TEINTURE SPÉCIALE

(30) Priority: 15.06.2017 US 201762520334 P; 15.06.2017 US 201762520341 P; 15.06.2017 US 201762520169 P; 15.06.2017 US 201762520178 P
(43) Date of publication of application: 22.04.2020
(73) Proprietor: Shenzhen PRS Limited, Shenzhen City, Guangdong Province 518125 (CN)
(72) Inventor: HUSHER, Frederick Knute, Shenzhen Guangdong 518000 (CN); SHUM, Jee Jong, Shenzhen Guangdong 518000 (CN)
(74) Representative: Osterhoff, Utz
(86) International application number: PCT/CN2018/091687
(87) International publication number: WO 2018/228576

(56) References cited:
- WO-A2-2006/031342
- CN-A- 103 471 892
- GB-A- 2 522 231
- GB-A- 2 524 227
- GB-A- 2 524 227
- US-A1- 2003 166 261
- US-A1- 2005 142 654
- US-A1- 2014 022 631

## Description

### FIELD

The present invention relates to a process record slide for special staining. The present invention particularly relates to the process record slide for Hematoxylin and Eosin, Urine, and Papinocolaou staining. More particularly, the present invention relates to the process record slide for special staining incorporating co-resident stain performance targets with tissue sections or loose cells so that the quality control of the staining process is recorded and that the hematoxylin reactivity is objectively measured. The stain performance becomes permanently locked with the co-resident tissue section or loose cells to support process QC and digital imaging of the stained results.

### BACKGROUND

Hematoxylin and Eosin (H & E) staining is the most common staining technique in histopathology. This uses a combination of two dyes, Hematoxylin and Eosin used for demonstration of nucleus and cytoplasmic inclusions in clinical specimens.

The staining method involves application of hemalum, a complex formed from aluminum ions and hematein (an oxidation product of hematoxylin). Hemalum colors nuclei of cells (and a few other objects, such as keratohyalin granules and calcified material) blue. The nuclear staining is followed by counterstaining with an aqueous or alcoholic solution of eosin Y, which colors eosinophilic structures in various shades of red, pink and orange.

The staining of nuclei by hemalum is ordinarily due to binding of the dye-metal complex to DNA, but nuclear staining can be obtained after extraction of DNA from tissue sections. The mechanism is different from that of nuclear staining by basic (cationic) dyes such as thionine or toluidine blue. Staining by basic dyes occurs only from solutions that are less acidic than hemalum, and it is prevented by prior chemical or enzymatic extraction of nucleic acids. There is evidence to indicate that coordinate bonds, similar to those that hold aluminum and hematein together, bind the hemalum complex to DNA and to carboxyl groups of proteins in the nuclear chromatin.

The eosinophilic structures are generally composed of intracellular or extracellular protein. The Lewy bodies and Malloiy bodies are examples of eosinophilic structures. Most of the cytoplasm is eosinophilic. Red blood cells are stained intensely red.

The structures do not have to be acidic or basic to be called basophilic and eosinophilic; the terminology is based on the affinity of cellular components for the dyes. Other colors, e.g. yellow and brown, can be present in the sample; they are caused by intrinsic pigments, e.g. melanin. Some structures do not stain well. Basal laminae need to be stained by PAS stain or some silver stains, if they have to be well visible. Reticular fibers also require silver stain. Hydrophobic structures also tend to remain clear; these are usually rich in fats, e.g. adipocytes, myelin around neuron axons, and Golgi apparatus membranes.

The Pap smear test is done on women at various intervals depending upon their age to perform cervical cancer screening. The frequency increases to yearly for women older than 50 in most parts of the world.

The Pap smear test is not fully standardized in the composition and timing of the dyes used, ratios, and timing. The Pap staining involves five dyes that are mixed into three solutions. The three solutions are: a nuclear stain, first counter stain, and second counter stain.

It is therefore an object of the present invention to provide a system which incorporates the co-resident targets with the tissue sample or loose cells. Preferably, the aforementioned targets have the following attributes: chemical molecules that are covalently bound to the slide and will covalently capture the stain molecule. The present invention provides as effective solution for the above mentioned problem by providing a process record slide with co-resident targets that are covalently bound to the slide adhesive and will covalently capture the stain molecule.

### SUMMARY

In a first aspect the present invention relates to a process record slide is disclosed with an array of inorganic targets each reactive to a single stain used as part of H&E and PAP staining and covalently bound to the slide, preferably to the slide's adhesive coating; wherein the stains are Hematoxylin + Mordant, Eosin Y as the first array of targets and Orange G, Phosphotungstic acid, Light Green SF or Fast Green FCF, and optionally Bismarck Brown or one to seven Special Stains as the second array of targets; and the mating inorganic targets that support a unique binding with H&E stains and a group of Special Stains with an opposing hydroxyl to covalently bind with the slide's adhesive coating.

The slide of the present invention is defined in claim 1.

The slide contains an adhesive coating (as mentioned above) to secure the tissue section or loose cells for processing. The most common adhesive slide used for this application is coated with amino-silane and is produced by most all glass slide manufacturers. The amine group will provide a covalent bond to hydroxyl end groups that is stable through 85°C.

In agreement with the present invention, the mating inorganic targets are: Sodium 4-hydroxybenzenesulfonate, Hydroquinone, Isobutanol, Phenolsulfonic acid, and p-Toluene Sulfonyl Chloride, and a blend of Polyphosphoric acid and Polyvinylalcohol.

Typically the hematoxylin target is a two, three or more-member gradient density blend of polyphosphoric acid and polyvinylalcohol, preferably, the gradient density comprises stepped dilution increments of 1 to 1000:1, more preferably, the gradient or series dilutions follows a -20log(dilution) profile. Explanation: The -20log(dilution) has the same meaning with dBd, that changes what is a log curve into a linear slope, which makes applying the impact of dilutions and processing reactions easy as they become linear actions throughout the dynamic range of the targets. The terms -20log(dilution) and dBd both refer to describing the dilutions on a semi-logarithmic basis in order to linearize the data so that modifying terms can be easily applied. The term (dilution) refers to the dilution X where X is [1..1000] equating to 1:1 to 1,000:1. The term dBd may be defined as decibels of dilution or the dilution strength.

In one embodiment, the H&E targets can be used to access the condition of both the Esoin Y and Hematein + Mordant stain reagents for quality control and color correction in the captured digital image.

In one embodiment, a process record slide containing an array of inorganic targets each reactive to a single stain used as part of Pap smear staining and covalently bound to the slide's adhesive coating.

Other aspects of the present invention are disclosed in the appended drawings and the following description.

### BRIEF DESCRIPTION OF DRAWINGS

The accompanying drawings are included to provide a further understanding of the invention. In the drawings,
Figure 1 illustrates the architecture of the process record slide for H&E staining in accordance to one embodiment of the present invention. The illustration shows the slide with the optional slide label in place.
Figure 2 illustrates the architecture of the process record slide for H&E staining in accordance to the one embodiment of the present invention.
Figure 2A shows the H&E slide as manufactured. The slide has the minimal ID via the lot code number with a blank area in the painted label area. There are two thick painted long axis bars that extend beyond the area of the target dots. The bars are a recent addition to address how the label printers dispense slides from the bottom of a stack. The bars ensure that the stack of slides above do not damage the slide coating and more importantly the paraffin shield coating and the targets dots below the paraffin.
Figure 2B shows the H&E slide with patient tissue sections applied. In this case there are three sequential replicate sections, but the sections could be spaced further apart as done in evaluating the excising of skin cancer, typical in MOHS surgery. The gray text is there just to identify what the paraffin areas are but, does not exist on the actual slide.
Figure 2C shows the H&E slide after being stained. Both the targets and tissue sections are now visible and ready for interpretation.
Figure 3 illustrates the architecture of the process record slide for PAP smear staining in manual smear mode in accordance to the one embodiment of the present invention.
Figure 3A shows the PAP-M slide as manufactured. PAP-M is the slide type identifier for a manually applied Pap smear. The slide has the minimal ID via the lot code number with a blank area in the painted label area. There are two thick painted long axis bars that extend beyond the area of the target dots. The bars are a recent addition to address how the label printers dispense slides from the bottom of a stack. The bars ensure that the stack of slides above do not damage the slide coating and more importantly the paraffin shield coating and the targets dots below the paraffin.
Figure 3B shows the PAP-M slide with the patient sample of loose cells plus mucus and debris. As the cells are largely transparent, the deposit would appear as just a slight clear haze on the slide.
Figure 3C shows the PAP-M slide after being stained. Both the targets and manual PAP smear are now visible and ready for interpretation.
Figure 4 illustrates the architecture of the process record slide for PAP smear staining where automated processing of the sample removes mucus and red blood cells, placing the cleaned sample into a hydrophobic ring in accordance to the one embodiment of the present invention.
Figure 4A shows the PAP-A slide as manufactured. PAP-A is the slide type identifier for an automated mucus cleaned Pap smear. The slide has the minimal ID via the lot code number with a blank area in the painted label area. This slide incorporates a hydrophobic barrier ring within which the 'cleaned' PAP sample is deposited. The barrier ring functions to retain the sample and keep the label printer from damaging the coating within the ring and the paraffin covered control targets.
Figure 4B shows the PAP-A slide with the 'cleaned' patient sample of loose cells within the hydrophobic barrier ring. As the cells are largely transparent, the deposit would appear as just a slight clear haze on the slide.
Figure 4C shows the PAP-A slide after being stained. Both the targets and loose cells within the barrier ring are now visible and ready for interpretation.
Figure 5 shows how the paraffin ensures a seal at the edges of its deposit.

### DETAILED DESCRIPTION

The present invention may be understood more readily by reference to the following detailed description of the invention taken in connection with the accompanying drawing figures, which forms a part of this disclosure.

Reference will now be made in details to the preferred embodiments of the present invention, examples of which are illustrated in the accompanying drawings. Wherever possible, the same reference numbers used in the drawings and description to refer to the same or like parts.

Reference may be made to the definitions of some terms used in the present invention for the ease in understanding of the invention.

"Inorganic targets" is used to represent a target or material that is able to bind to the stains used in the detection. The stain is selected from the group consisting of Alcian Blue, Bielschowsky Silver Stain, Bismarck Brown, Gram Stain, Cresyl Violet, Fontana Masson, Gordan and Sweet's Silver Staining, Light Green SF or Fast Green FCF, Grocott's Methanamine Silver Method, Hall's Bilirubin Stain, Luxol Fast Blue Mucicarmine, Muller-Mowry Colloidal Iron, New Methylene Blue, Nuclear Fast Red, Oil Red O, Orange G, PAS with Diastase Digestion, Periodic Acid Schiff (PAS), Phosphotungstic acid, Picro Sirius Red, Prussian Blue Reaction, Toluidine Blue Acidified, Trichrome-Gomori's One-Step, Trichrome-Masson's, Verhoff-Van Geison, Von Kossa, Weigert's Resorcin Fuchsin,Zeil-Neelsen.

The targets include, but are not limited to: a blend of polyphosphoric acid and polyvinylalcohol, Sodium 4-hydroxybenzenesulfonate, Hydroquinone, Isobutanol, Phenolsulfonic acid, p-Toluene Sulfonyl Chloride, and others using a hydroxyl end group that is covalently bound to the slide's adhesive coating.

"Inorganic deposit" is used to indicate the accumulated amount of stain particles after staining process. In some embodiments, the inorganic deposit is stain.

" Haematoxylin" or "hematoxylin" also called natural black, is a compound extracted from the heartwood of the logwood tree (Haematoxylum campechianum). Haematoxylin and eosin together make up haematoxylin and eosin stain, one of the most commonly used stains in histology.

"Eosin" is most often used as a counterstain to hematoxylin in H&E (haematoxylin and eosin) staining. H&E staining is one of the most commonly used techniques in histology. Tissue stained with haematoxylin and eosin shows cytoplasm stained pink-orange and nuclei stained darkly, either blue or purple.

Hematoxylin and Eosin (H&E) staining is used to process a myriad of biological samples to support a first view for ImmunoHistoChemical (IHC) processing, H&E as the finished result, or with Special Stains to deliver a finished result.

"Papanicolaou stain" (also Pap stain) is a multichromatic staining technique for cytopathology evaluation of various bodily secretions. The most common use is for gynecological smears (Pap smear). Other applications include sputum, brushings, washings, urine, cerebrospinal fluid, abdominal fluid, pleural fluid, synovial fluid, seminal fluid, fine needle aspiration material, tumor touch samples, and other materials containing loose cells.

The Pap smear test is done on women at various intervals depending upon their age to perform cervical cancer screening. The frequency increases to yearly for women older than 50 in most parts of the world. The Pap smear testing in this instance is used specifically to test squamous cells scraped from a woman's uterus at the outer opening of the cervix, where the outer squamous cervical cells meet the inner glandular endocervical cells, for abnormal growth that would signal pre-cancer or cervical cancer.

The Pap smear test is not fully standardized in the composition and timing of the dyes used, ratios, and timing. The Pap staining involves five dyes that are mixed into three solutions. The three solutions are: a nuclear stain, first counter stain, and second counter stain.
▪ A nuclear stain, which is a Mordanted hematoxylin mixture, is used to stain the cell nuclei.
▪ The first counterstain Orange Green, which is a mixture of phosphotungstic acid and Orange G.
▪ The second counterstain is Eosin Azure, which is a mixture of Eosin Y, Light Green SF (or Fast Green FCF), and Bismark Brown.

It is therefore an object of the present invention to provide a slide which incorporates the co-resident targets with the tissue sample or loose cells. Therefore, the aforementioned targets must have the following attributes: chemical molecules that are covalently bound to the slide's adhesive and will subsequently covalently capture the stain molecule.

In the one embodiment of the present invention, a process record slide incorporates a collection of different inorganic stain specific targets that are co-resident with the biological materials being stained. The targets represent the efficacy of each stain component, and for stains having known ageing behaviors, a gradient density array. The aforementioned targets must uniquely react with but one of the stain components. Using biological materials is not practical as the reactive site concentration will not be well controlled and thus not repeatable.

In another embodiment of the present disclosure, the process record slide is coated with an adhesive using a variety of reactive chemistries to capture the targets and tissue section or loose cells. In the target solutions developed for the Special Stains above, all use a hydroxyl end group to support a covalent bond to the slide coating. The most common adhesive coated slide uses an amino-silane coating available from most all microscope slide manufacturers. The amine end group will form a covalent bond to a hydroxyl that remains stable through 85°C. However, the invention does not limit the use of other end groups on the targets or the use of an intermediate coupler if so needed to match to a different adhesive slide coating chemistry.

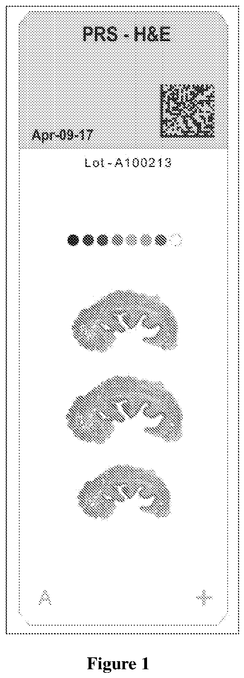

Reference may be made to Figure 1 which illustrates the implementation of the H&E onto an process record slide. The basic architecture of co-resident targets for the H&E slide in the dual marking configuration in one embodiment is illustrated in Figure 1.

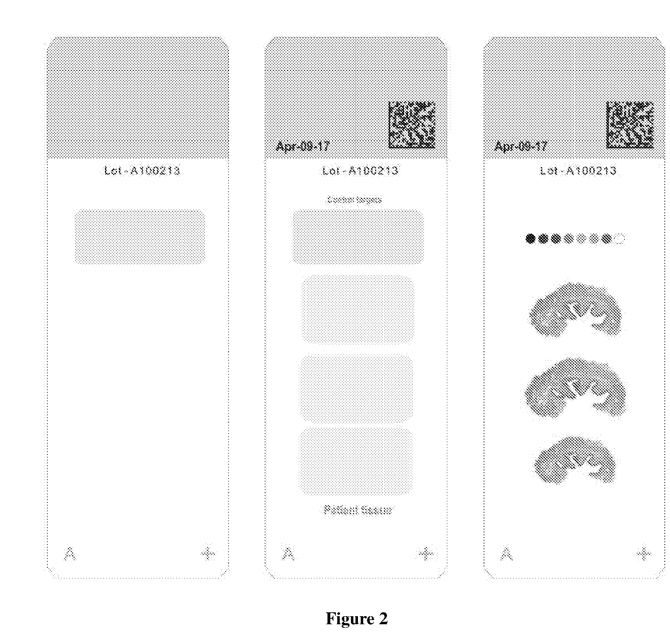

In one embodiment, the process record slide follows the general architecture of marking just below the label area with the lot number and optionally of marking the slide's label with the slide type. All to most of the label area is left for the user to apply their 2-d bar code and text information. The slide type is PRS-H&Exx, where xx defines the "Special Stain" set applied on the second row. If xx is not present then there is no second line of targets. The targets are printed near the label end to maximize the area for tissue section replicates. Figure 2A-C illustrate the sequence of the IHC slide's usage. As can be seen the title has been left off as this is optional and can be embedded with the lot code.

In another embodiment, the basic version of the slide contains a target series composed of one Eosin Y and a gradient density array for Hematoxylin which are bounded at the ends by a black and white target. The black and white targets are used to establish the dynamic range for digital imaging. The black and white end targets enable the user to know where the targets are located on the slide, since the other targets are largely clear, so that tissue sections are not applied on top of the targets. This is of great value when transferring frozen tissue sections onto the slide blank.

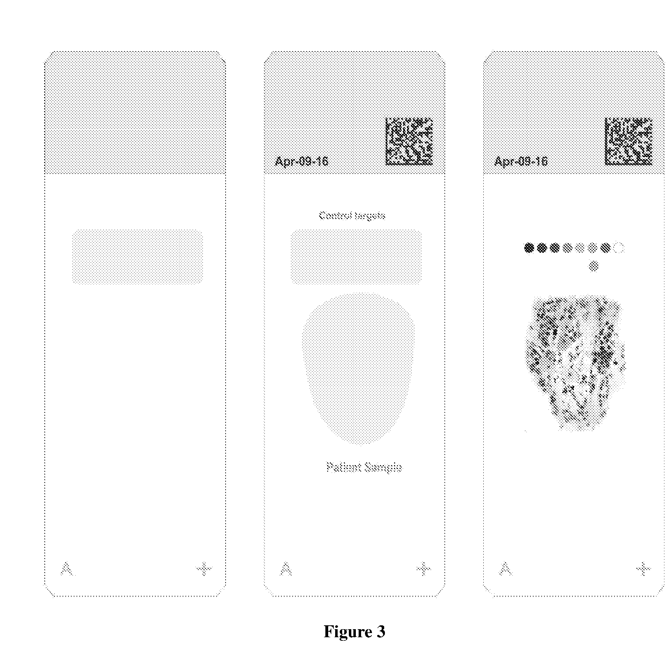

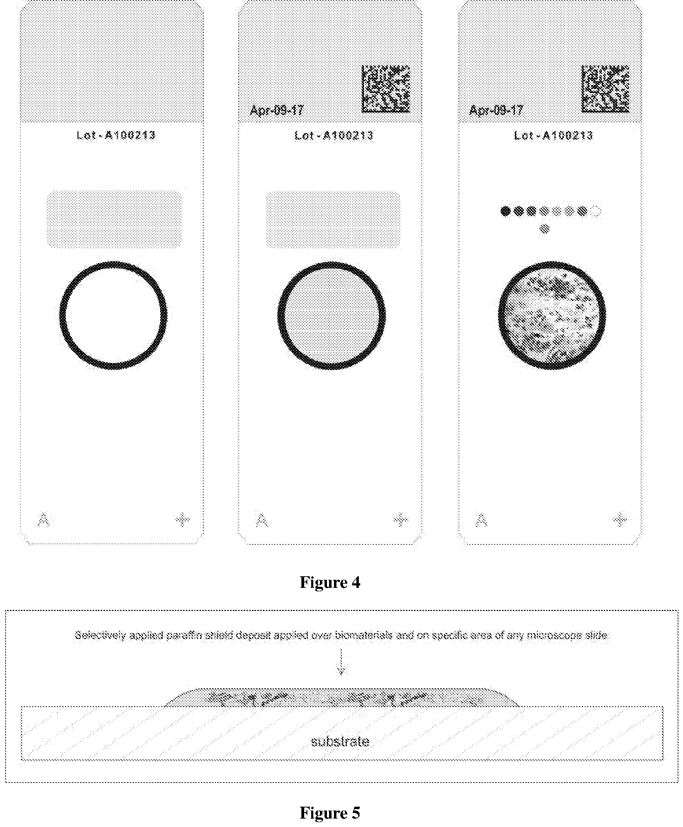

Reference may now be made to Figures 3 and 4 which illustrates the slide for PAP smear staining.

In one embodiment of the present invention, the process record slide for Pap smears is implemented in two configurations: manual smear Figure 3 and automated mucus cleaned Figure 4. Illustrations are shown for both versions.

In another embodiment, both slides follow the general process record slide architecture of marking just below the label area with the lot number and optionally of marking the slide's label with the slide type. All to most of the label area is left for the user to apply their 2-d bar code and text information.

In another embodiment, the stain reagent targets are in two groups: top row contains a gradient density array of hematoxylin + Mordant reactive targets bounded by black and white reference targets. The bottom row contains a single target for Bismark Brown, two different density targets for phosphotungstic acid, two different density targets for the green stains, a single target for Orange G, and a single target for Eosin Y. The patient Pap smear is applied to the middle of the active area on the slide. The automated adhesive-PAP slide version uses a hydrophobic barrier ring to prevent the cleaned cell slurry from the slide maker from spreading. The hydrophilic behavior of the coating ensures the cells will not pile up along the walls of the ring. Both dip-n-dunk bath and capillary gap stain processing can be supported by these slides.

In another embodiment, each stain is described below and mode for binding with loose cell and tissue sections. Afterwards, the chemical construct is described that will uniquely capture the stain.

### Shield Coating

Paraffin wax in general, is a white or colorless soft solid, derived from petroleum, coal or oil shale, which consists of a mixture of hydrocarbon molecules containing between twenty and forty carbon atoms. It is solid at room temperature and begins to melt above approximately 37 °C (99 °F); its boiling point is >370 °C (698 °F). Common applications for paraffin wax include lubrication, electrical insulation, and candles; dyed paraffin wax can be made into crayons. It is distinct from kerosene and other petroleum products that are sometimes called paraffin.

In a pathology laboratory, paraffin wax is used to impregnate tissue prior to sectioning thin samples of tissue. Water is removed from the tissue through ascending strengths of alcohol (75% to absolute) and the tissue is cleared in an organic solvent such as xylene or one of the aliphatic substitutes, such as Xylol. The tissue is then placed in paraffin wax for a number of hours and then set in a mold with wax to cool and solidify; sections are then cut on a microtome.

The embedding of tissue sections into paraffin is a routine practice for the preservation of the tissues sections for a prolonged period of time. However, the application of paraffin as a thin coating layer on a selected area of a microscope slide has not been reported.

Tissue blocks and sections cut from the tissue block are infused with paraffin that completely replaces the water content of the tissue's cellular structure. The paraffin inherently does not support bacterial and fungal growth, which ensures long term stability of the embedded biomaterials.

Targets that react uniquely with the chemical structure of inorganic stains are also susceptible to oxidation and reaction with airborne materials. Such stain reactant targets include those for Hematoxylin, Eosin, and most of the special stains group. The targets for these stains are designed to react singularly with but one stain. Biological targets do not, for the most part, provide for such singularity but chemical constructs can.

In general, the paraffin is blended with a solvent to change the material state from solid to a liquid at room temperatures. The blend uses Paraplast X-tra or equivalent with Xylene or a Green Xylene replacement: an Aliphatic solvent, for example Xylol to reduce the viscosity and slow down solidification following deposition. In another embodiment, the solvent may be selected but not limited to toluene, paint thinner, turpentine, or a 50:50 mix of acetone & kerosene.

In another embodiment, the solid paraffin is melted at no more than 75°C above the paraffin melt temperature until liquid, then slowly add an Aliphatic solvent until the saturation point is observed (solids are formed). Allow the mixture to cool to 45°C and slowly add more Aliphatic until it is completely clear.

In another embodiment, the aforementioned paraffin coating applied over inorganic targets with the special stain reactive end groups that uniquely capture a special stain material which react with the applied antibody and secondary stain reagents and special stain reactive deposits previously applied to an adhesive coated a microscope slide.

In another embodiment, the paraffin layer may be deposited onto the adhesive coated microscope slide which include but are not limited to: spray, inkjet deposit, transfer printing (such as pad printing), screen printing, and vapor deposition. In all deposition methods, the paraffin layer must be less than 5µm thick to ensure that during the paraffin removal step of the staining process, all the paraffin (shield and tissue section embedding) can be dissolved and carried away. Independent of the deposition process/method, the criterion of the paraffin is:
- A thin layer, preferably about no thicker than 5 microns,
- Have a melting temperature of less than 60°C and preferably less than 56°C and dissolves with exposure to xylene or xylol (aliphatic replacement) solvents, and
- Have ambient temperature hardness similar to the embedding paraffin's.

In another embodiment, the tissue block embedding paraffin materials may include but not limited to TissuePrep & TissuePrep 2 by Thermo Fisher, melting temp 56°C, Paraplast &Paraplast plus by Leica, melting temp 56°C, Paraplast X-tra by Leica, melting temp 50-54°C. Paraplast X-tra specifically incorporates butylated hydroxytoluene, a phenolic antioxidant, to reduce oxidation degradation of inorganic targets.

In another embodiment, each is a blend of purified paraffin, synthetic polymers, and other materials to establish the melt temperature, hardness, and viscosity. Inherent to paraffin is non-support of microbial growth.

In another embodiment, the special stains may include but are not limited to: Alcian Blue, Analine Blue - Orange G Solution, Azan Stain, Bielschowsky silver stain, Brow & Benn - Gramm Stain, Cresyl Violet, DAB, Fontana Masson, Gordon and Sweet's silver staining, Grocett's Methanamine silver method, Hall's Bilirubin stain, Jones Methanamine silver method, Luxol Fast Blue, Luxol Fast Blue -- Cresyl Violet, Mucicarmine (Mayer's Method), Muller-Mowry colloidal Iron, Orange G, Nuclear Fast Red, PAS with Diastase Digestion, Periodic Acid Schiff (PAS), Phosphotungstic Acid, Haematoxylin, Picro Sirius Red, Toluidine Blue Acidified, Trichrome -- Gomoris One-Step, Trichrome -- Masson's, Victoria Blue, Von Kossa, Weigert's Resorcin Fuchsin, Weigert's Iron Haematoxylin, Zell -- Neelsen Method.

In another embodiment, the targets may be selected but not limited to pigment colored deposits such as black and white, but can include any pigment color.

In another embodiment, the slide on which the aforementioned paraffin coat may be applied may be selected from but not limited to glass, plastic or any polymer material. In another embodiment, the paraffin maybe purified and water free.

In another embodiment, the resultant microscope slide may be post heated to melt and/or blend paraffin particles into a monolithic surface coating sealing both the deposits and the slide surface surrounding the deposits.

In yet another embodiment, the resultant microscope slide heat after the paraffin is deposited to force the solvent out of the paraffin, ensuring that it returns to a hardened state. This must be done from the paraffin side of the slide, preferably using infrared light. Melting the paraffin from the top down ensures that the solvent is able to rise up and evaporate from the paraffin without encumbrance. The result is illustrated in Figure 5, which shows how the melted paraffin ensures a good seal at the edges of its deposit.

### Imaging Reference Targets

In addition to target arrays, black and white imaging reference targets are printed.

Digital imaging of microscope slides containing stained biomaterials is evolving to perform prescreening and potentially full diagnostic determination on the stained materials. In general, the imaging system must adjust the illumination light level so that the digital image is not in compression at either the white or black boundaries. The conventional solution is to have black and white targets located where the label is expected to be positioned. The underlying assumption is that the white and black targets represent the extremes that the slide can present. However, in doing so there is compression in the digital scale as the black is much blacker and the white much whiter than can realized by the staining of a tissue section.

In one preferred embodiment of the present invention, a microscope slide is disclosed that incorporates control and reference target standards which are co-resident with a patient tissue section or loose cell deposit. The reference targets and tissue section record the processing experience between tissue capture and cover slipping of the stained slide.

In another embodiment of the present invention, amongst the microscope slide target arrays are co-resident black and white reference targets. The black and white reference targets have experienced that same exposure to reagents and processing as the other targets and tissue section.

In another embodiment of the present invention, both the reference targets i.e. the black and white targets are printed paint deposits which are non-reactive to any of the reagents used to process a slide. The white target in an ideal situation would be a perfect white. However, there is very little stained biomaterial usefulness that gets more than halfway from black to white. Thus, the white can be 5-10% away from perfect white and still be of useful value. In a preferred embodiment, the white is of a metal oxide or sulfate composition that is stable with the passage of time when not left exposed to sunlight. In a more preferred embodiment, the white is aluminum and titanium oxide.

In another embodiment, the black and white targets are both based on an anhydride based epoxy paint base that is catalyzed by direct UV light exposure at nominally 365nm. The anhydride catalyzer is composed of methyl tetrahydrophthalic anhydride and diphenyliodonium hexafluroroarsenate. Other than UV initiated, anhydrides require the addition of heat to function in catalyzing the epoxy to cross-link. The preferred UV initiated anhydride and its companion are listed, but there are other solutions possible that can be found when performing a search of anhydride producing companies. While such a paint/ink can be constructed as needed, it is usually a purchased component that has been optimized for the printing method being used. Fabrication of the paint/ink must address the difficulty in achieving good wetting between the pigment particles and the epoxy binder. Anhydride based paints (also called an ink when having low viscosity) often have the anhydride mixed in with the epoxy as the pot life can be many months in duration. To lower the viscosity would be known knowledge of those involved in the printing industry and the formulation varies depending on the surface the epoxy mixture is to applied onto and the printing method used. While heat triggered anhydride-epoxy paint/inks are commonly used, the heat necessary to initiate the reaction can potentially damage biomaterials (proteins, peptide, and chemical targets) that may be co-resident with the paint/ink.

In another embodiment, the anhydride catalyzer eliminates the unreacted amines found with an amino-silane based catalyzer that would otherwise support non-specific staining. Free amine end groups can and will capture both biomaterials and some of the special stains. Specifically, this addresses the issue of undesired staining of the white target by the slide processing reagents, in particular the staining reagents. As a free amine end group on the surface of the paint/ink, it can capture both the primary antibody and secondary stain reagents and become stained. Thus, defeating the value of having an integrated white target on the slide.

In another embodiment, the black pigment uses a carbon dust of less than 2 microns diameter while the white uses aluminum, titanium oxide, or barium sulfate beads. Barium sulfate is the preferred white pigment this application.

In another embodiment, the preferred epoxy ink/paint formulation avoids surfactants altogether, to prevent leaving the ink/paint reactive to the range of stains and reagents these slides can experience.

In another embodiment, the printing of the targets can be done by pad stamp or syringe. In yet another embodiment, the syringe is preferred as it supports better feature size control of the target deposition.

In another embodiment, the aforementioned white targets are composed of metal oxide or sulfate pigments within an anhydride catalyzed epoxy. In another embodiment, the aforementioned black targets are composed of carbon pigments within a UV initiated anhydride catalyzed epoxy. In another embodiment, the anhydride catalyzer is UV initiated by direct UV light exposure. The primary advantage of using the UV initiated anhydride catalyzer is that the heat needed to initiate anhydride-epoxy reaction exceeds what the biomaterials (proteins, peptide, and chemical targets) can tolerate without damage. More importantly is the elimination of any free amines that could react with the stain reagents.

### Hematoxylin

Hematoxylin is not a dye in itself and will not bind to biomaterials. However, when mixed with a Mordant, a weak acid, and other materials a dye is formed that forms a covalent bond to the target sites. The choice of Mordant affects what tissue elements the dye will bind onto. For the Pap smear Hematoxylin is used to stain the cell nuclei. Therefore, the Mordant choices to stain cell nuclei are Aluminum, Iron, and Tungsten which usually result in Aluminum being chosen. The hematein is oxidized hematoxylin as illustrated below.

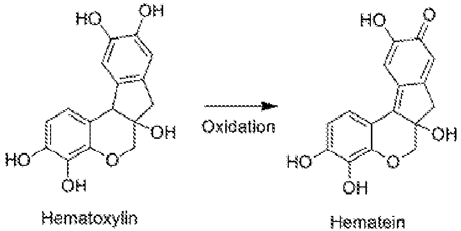

The aluminum mordant modification to the hematein end group occurs as:

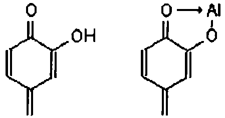

Binding of hematein + Mordant to phosphate base units in the DNA is shown below:

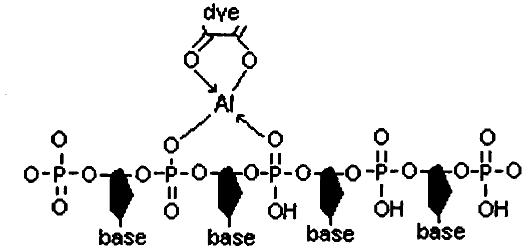

A synthetic polyphosphoric acid can replace the DNA strand to form a unique target site to capture the hematein + Mordant dye. To complete the formulation however, a similar polymer is needed that is unrea ctive to the dye such that the target concentration can be adjusted for a gradient density array of target sites. Polyphosphate is a weak base. However, the polymer must be converted into polyphospheric acid which requires the donation of a hydrogen atom to the O- end group. This can be done using hydrogen peroxide, HOHO, which results in H₂O as the leaving group.

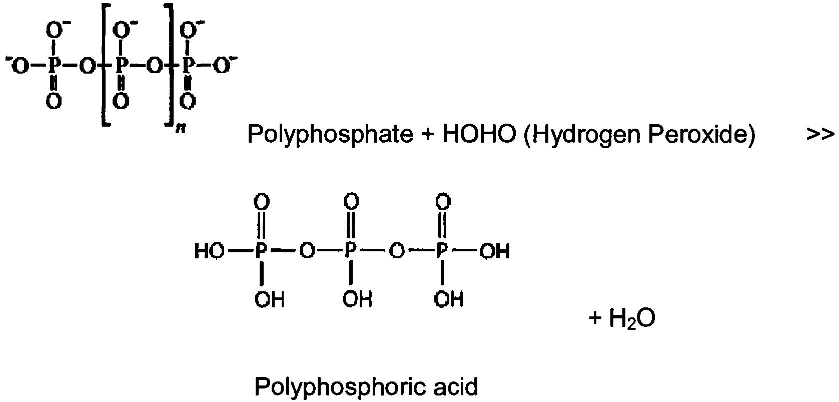

The goal is to control the density of the polyphosphoric acid sites to form a gradient density array. To achieve this the polyphosphoric acid must be mixed with another hydroxyl polymer so that both can realize a covalent bond to the substrate adhesive. The solution is to use polyvinylalcohol, PVA, or similar polymer.

The rational for providing a gradient density array of targets for Hematoxlyin comes from the organic origin of the Hematoxylin that includes other materials and the conversion into a Mordanted Hematein dye. The factors that affect the color and color density of the Hematoxylin targets and co-resident tissue are the following:

The concentration of the Mordanted Hematein dye varies with time, especially if processing is done in baths. The carryover of rinse water dilutes the bath. The bath will form a gradient density becoming denser the deeper into the bath the slide reaches if the reagent is not kept in motion. The settling occurs because the molecular weight of the dye is large compared to the water which makes up the majority of the bath.
1. The oxidation process that converts hematoxylin to hematein continues irregularity to take place over time, resulting in reduced dye strength and precipitated dye that must be removed.
2. Oxidation of hematoxylin can produce several oxidized derivatives: mono-, di-. Tri-, penta-, and tetro-hematein. Each aluminum Mordant hematein has a different color as a function of the oxidation derivative: di- & tri- are purple to blue, tetro- is brownish, and pento- is clear. Other Mordants will shift the color basis in a similar fashion.
3. Aerobic oxidation of the hematein stock solution can also contribute to degradation.

Identification of the hematein + Mordant dye condition and type becomes easier if a target series of different reaction site densities is used. The gradient series will go from saturated to midrange. Thus, as the stain concentration weakens and/or the oxidation degrades, the hematein the saturated targets will slip out of saturation allowing the dye concentration to be evaluated.

### Phosphotungstic acid

Phosphotungsten acid (TPA) is a heteropoly acid with the chemical formula of H3PW12O40. It can be better described as tungsten acid cage around a single phosphoric acid molecule as illustrated below:

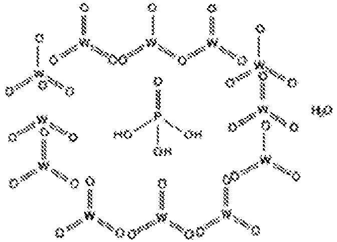

The phosphotungstic acid alone binds biomaterials through a pair of adjacent CH3 end groups as occurring in the valine and leucine amino acids. The phosphotungstic acid binds to fibrin and collagen by replacing the anions of dyes from these materials, selectively decoloring them.

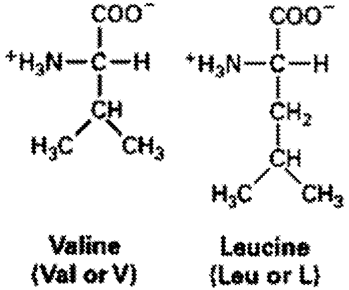

Two adjacent tungstic acid groups within the phosphotungstic acid react with the two CH3 end groups to form:

R'-CH(CH₃)₂ + --W=O₃-O₃=W-- >> R'-CH[(CH=W=O₂]₂ + 2H₂O

The inorganic target becomes isobutanol (isobutyl alcohol) HOCH₂CH(CH₃)₂, where the hydroxyl binds to the adhesive coating.

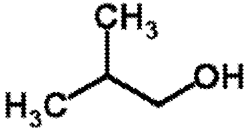

### Orange G

Orange G is a synthetic azo dye usually coming with a disodium salt. For Pap staining the Orange G is used to stain keratin. The original function was to stain the small cells of keratinizing squamous cell carcinoma that is present in sputum.

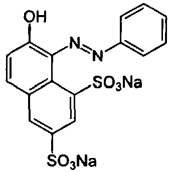

The target needs to be a benzene ring with -SO₃Na and -OH end groups. This needs to be constructed by 4-hydroxybenzenesulfonic acid mixed with NaCl or purchased in converted form.

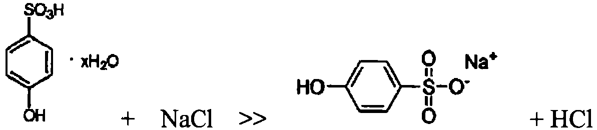

The product becomes: Sodium 4-hydroxybenzenesulfonate

When the target end group R(C6H4)SO4Na reacts with the -RSO4Na on the Orange G stain the reaction becomes:

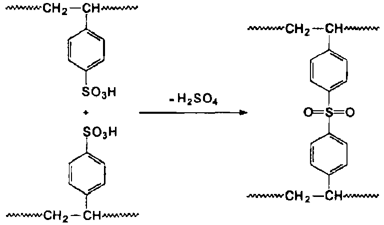

Except the H is Na so the waste product becomes Na₂SO₄, Sodium Sulfate, which precipitates as a white powder.

### Eosin Y

Eosin Y is a form of eosin. It is commonly used as an acidic red stain for highlighting the cytoplasm in cells. In the Pap smear the Eosin Y stains the superficial epithelial squamous cells, nucleoli, cilia, and red blood cells. Eosin Y binds to three known end groups:
▪ Phenolic groups
▪ Carboxyl groups
▪ Metal oxides

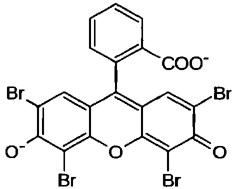

For our application, it is important to use a target that uniquely reacts with the eosin and no other special stain. The phenolic group is the only viable choice.

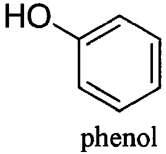

To be consistent with the other Pap targets the phenol must have opposing hydroxyl end groups as occurs in:

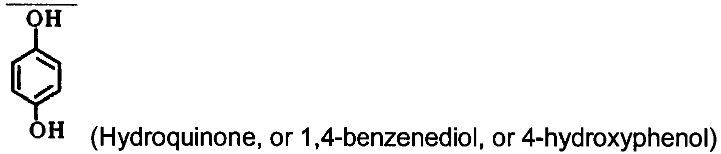

### Light Green SF or Fast Green FCF

Light Green SF is a green triarylmethane dye while Fast Green FCF is a sea green triarylmethane dye. The dye stains the cytoplasm of cells other than keratinized squamous cells. The structures are very similar allowing a single target to support both green dyes.

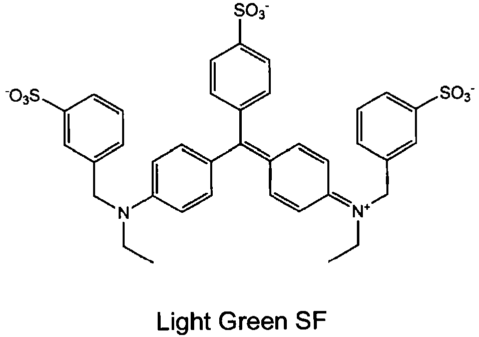

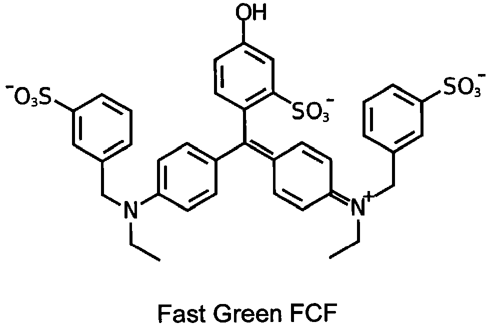

Both of the green stains seek a -R(C₆H₄)SO₃H end group on the target sites. This is realized by phenolsulfonic acid, HO(C₆H₄)SO₃H.

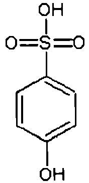

### Bismarck Brown

Bismarck Brown is a diazo dye which is used to stain acid mucins.

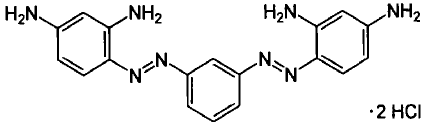

The key is to couple to the -NH₂ end group on the stain. The solution is to use a Tosyl coupling reaction wherein the following takes place:

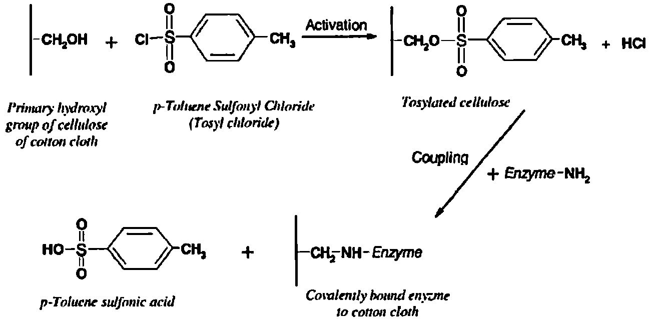

The solution is as follows:
A tosyl activator is applied p-Toluene Sulfonyl Chloride to a hydroxyl end group on the slide adhesive

   R'--C(CH₂)₂OH + Cl(S=O₂)C₆H₄CH₃ >> R'---CH₂O(S=O₂)C₆H₄CH₃ + HCl
When the stain's -NH2 end group is presented the activator is released and the amine is captured.

   R'--CH₂O(S=O₂)C₆H₄CH₃ + R"--NH₂ >> -R'--CH₂NH-R" + HO(S=O₂)C₆H₄CH₃.

In one embodiment, the second row of stain targets supports special stains usage, if elected. These targets are inorganic, uniquely target a specific stain, and capture the specific stain with a covalent bond. The special stain reactive targets may be selected from but not limited to Alcian Blue, Bielschowsky Silver Stain, Bismarck Brown, Gram Stain, Cresyl Violet, Fontana Masson, Gordan and Sweet's Silver Staining, Light Green SF or Fast Green FCF, Grocott's Methanamine Silver Method, Hall's Bilirubin Stain, Luxol Fast Blue Mucicarmine, Muller-Mowry Colloidal Iron, New Methylene Blue, Nuclear Fast Red, Oil Red O, Orange G, PAS with Diastase Digestion, Periodic Acid Schiff (PAS), Phosphotungstic acid, Picro Sirius Red, Prussian Blue Reaction, Toluidine Blue Acidified, Trichrome-Gomori's One-Step, Trichrome-Masson's, Verhoff-Van Geison, Von Kossa, Weigert's Resorcin Fuchsin,Zeil-Neelsen.

In another embodiment, the preferred solution for H&E staining with the adhesive coated microscope slide is as follows:
The base version of the PRS-H&E supports only H&E targets. The targets are designed to react uniquely with Hematein + Mordant and Eosin Y. However, when the Mordant for Hematein is Phosphotungstic acid, an additional target site will be needed for the Phosphotungstic acid alone.

### Hematein + Mordant

A blend of Polyphosphoric acid and Polyvinylalcohol to form, a five-element minimum, gradient density array following a dBd profile.

### Eosin Y

### Hydroquinone

These inorganic target chemistries are not the only solutions possible, but they represent the viability of a target series that will singularly react with only one stain each in the H&E staining sequence.

### Examples

### Example 1 Testing of each stain target or gradient density target set.

H&E (Figure 2), PAP-M (Figure 3), and PAP-A (Figure 4) slides were manufactured, which share the same top line of targets for hematoxylin and eosin stain testing. The second line of both Pap slides contains targets for phosphotungstic acid, Orange G, Light Green SF or Fast Green FCF, and Bismarck Brown. It could be seen that PAP-A comprises the targets of all three slides, thus the PAP-A slide would function well to test all elements of the three slide types. The testing was broken into four groups depending on how the stain behaved.

> Test A: Binary testing of stain presence for Orange G, Light Green SF or Fast Green FCF, and Bismarck Brown. The testing simply exposes a slide to one of the listed stains to confirm that the correct capture target is stained while the balance of the targets do not stain.

> Test B: pH based testing of Eosin Y. The test forces the pH of the Eosin Y to 4.5, 5.5, and 6.5. Both the low and high pH conditions should stain very poorly, while the mid-range pH target stains correctly.

>Test C: Concentration based testing of Hematoxylin. The test starts with the concentration as freshly made in a 50ml quantity in a tall 27mm ID jar. A slide is stained, and the concentrate allowed to sit for 30-minutes with air bubbling through the liquid to force oxidation. The test continues for 4hrs.

> Test D: Effect of pH on phosphotungstic acid. Stain performance changes as pH drops from 8.5 to 7.

Test A results: Standard concentration mixtures in 50ml quantity in a tall 27mm ID jar were made for each stain. Each stain was tested 3 times to show replication. All slides showed the correct target becoming stained with no other target also being stained.

Test B results: A 5-slide storage tube was filled with a purchased ready to use fresh Eosin Y. The container holds about 20ml of reagent. The testing was done in pairs: normal and low pH followed by normal and high pH. Nominal pH was set to 4.5 through adjustment with boron hydrate and boric acid as needed. Three slides per test cycle were made. Following the normal baseline slide staining the pH was lowered to 3.5 and new slides stained. Following the normal baseline staining the pH was raised to 5.5 and new slides stained. As expected the stain density was with 1% for each slide set and fell by nearly 50% with the pH changes.

Test C results: Hematoxlyin was purchased as Mayer's Hemalum solution. The targets started out all in saturation and over time the gradient scale showed as the oxidation of the reagent continued. The test accelerated the degradation to show the behavior. By the time that 4hrs had passed the 100% target had degraded by over 50%.

Test D results: Phosphotungstic acid was mixed in a standard 50ml quantity in a tall 27mm ID jar and adjusted for pH with HCl to 8.5. A slide was stained and the pH dropped by 0.5pH. The test cycle was repeated until pH was 7. As expected, all the targets were in saturation at pH 8.5. When pH dropped to 7 the gradient density scale was visible and the 100% target at about 30% loss in color density.

## Claims

1. A slide, comprising
(a) an area for application of tissue section or loose cells for staining and subsequent examination; and U
(b) an area comprising an adhesive coating adhering to the slide and an inorganic target covalently bound to the adhesive coating,
**characterised in that** the inorganic target comprises a blend of polyphosphoric acid and polyvinylalcohol, sodium 4-hydroxybenzenesulfonate, hydroquinone, isobutanol, phenolsulfonic acid, or p-toluene sulfonyl chloride.

2. The slide as claimed in claim 1, wherein the inorganic targets uniquely bind to stains selected from the group consisting of Alcian Blue, Bielschowsky Silver Stain, Bismarck Brown, Gram Stain, Cresyl Violet, Fontana Masson, Gordan and Sweet's Silver Staining, Light Green SF, Fast Green FCF, Grocott's Methanamine Silver Method, Hall's Bilirubin Stain, Luxol Fast Blue Mucicarmine, Muller-Mowry Colloidal Iron, New Methylene Blue, Nuclear Fast Red, Oil Red O, Orange G, PAS with Diastase Digestion, Periodic Acid Schiff (PAS), Phosphotungstic acid, Picro Sirius Red, Prussian Blue Reaction, Toluidine Blue Acidified, Trichrome-Gomori's One-Step, Trichrome-Masson's, Verhoff-Van Geison, Von Kossa, Weigert's Resorcin Fuchsin, and Zeil-Neelsen.

3. The slide as claimed in claims 1 to 2, which comprises at least one array of two or more targets, each of which is reactive to eosin Y or hematoxylin.

4. The slide as claimed in any one of claims 1 to 3, wherein the hematoxylin target is a two or more membered gradient density blend of Polyphosphoric acid and Polyvinylalcohol.

5. The slide as claimed in any one of claims 1 to 4, wherein the slide comprises at least one array of two or more targets, each of which is reactive to a single stain used as part of Pap smear staining.

6. The slide as claimed in claim 5, wherein the stains used as part of Pap smear staining include: Orange G, Phosphotungstic acid, Light Green SF or Fast Green FCF.

7. The slide as claimed in any one of claims 5 or 6, wherein the targets which bind to stains used as part of Pap smear staining include: Sodium 4-hydroxybenzenesulfonate, Isobutanol, Phenolsulfonic acid, and p-Toluene Sulfonyl Chloride.

8. The slide as claimed in any one of claims 1 to 7, wherein the adhesive coating is covalently attached to the slide and comprises reactive end groups selected from the group consisting of amine, amide, carboxyl, and hydroxyl.

9. The slide as claimed in any one of claims 1 to 8, further comprising one or more imaging reference loading dots, preferably, the imaging reference dots include at least a black target or a white target, more preferably, both black and white targets are included.

10. The slide as claimed in claim 9,
wherein the black reference target is selected
from carbon dust; preferably, the carbon compound is in the size range of 0.1 to 2 micron; and/or
the white reference target is selected from titanium oxide, aluminum oxide, aluminum sulfate, or barium sulfate.

11. The slide as claimed in any one of claims 1 to 10, wherein the slide comprises a lot code number applied just below the label space on the slide.

12. The slide as claimed in any one of claims 1 to 11, wherein the slide comprises a marking label.

13. The slide as claimed in any one of claims 1 to 12, wherein the slide comprises a hydrophilic barrier ring to prevent the cleaned cell slurry from spreading.

14. A method for staining a slide as claimed in any one of claims 1 to 13, comprising the following steps of:
b. applying a sample to the area for application of tissue section or loose cells of the slide;
c. applying one or more stains to the sample and the in organic_targets;
d. determining the color density of the stained tissue or cells quantitatively based on the target gradient, and/or assessing the staining process for tissue or cells based on the staining result of the targets.

15. The method as claimed in claim 14, wherein the staining is hematoxylin-eosin staining (H&E staining), Pap smear staining or both.

16. The method as claimed in claim 15, wherein the stains used for H&E staining are Eosin Y and Hematoxylin; and the stains used for Pap smear staining include: Orange G, Phosphotungstic acid, Light Green SF or Fast Green FCF.

## Patentansprüche

1. Objektträger, umfassend
(a) einen Bereich zum Auftragen von Gewebeschnitten oder losen Zellen zur Färbung und anschließenden Untersuchung; und
(b) einen Bereich, der eine am Objektträger haftende Klebebeschichtung und ein kovalent an die Klebebeschichtung gebundenes anorganisches Ziel umfasst,
**dadurch gekennzeichnet, dass** das anorganische Ziel eine Mischung aus Polyphosphorsäure und Polyvinylalkohol, Natrium-4-hydroxybenzolsulfonat, Hydrochinon, Isobutanol, Phenolsulfonsäure oder p-Toluolsulfonylchlorid umfasst.

2. Objektträger nach Anspruch 1, wobei sich die anorganischen Ziele ausschließlich an Farbstoffe binden, die aus der Gruppe ausgewählt sind, bestehend aus Alcianblau, Bielschowsky-Silberfarbstoff, Bismarckbraun, Gram-Farbstoff, Cresylviolett, Masson-Fontana, Silberfärbung nach Gordon und Sweets, Lichtgrün SF, Echtgrün FCF, Methenamin-Silberfärbungsverfahren nach Grocott, bilirubinspezifische Hall-Färbung, Luxol-Fast-Blue-Mucicarmin, Müller-Mowry-Färbung mit kolloidalem Eisen, Neu-Methylenblau, Kernechtrot, Oil Red O, Orange G, PAS mit Diastase-Verdauung, Periodic Acid Schiff (PAS), Phosphorwolframsäure, Pikro-Siriusrot, Berliner Blau-Reaktion, angesäuertem Toluidinblau, einschrittigem Gömöri-Trichrom, Masson-Trichrom, Verhoff-Van Geison, Von Kossa, Weigerts Resorcinfuchsin und Zeil-Neelsen.

3. Objektträger nach den Ansprüchen 1 bis 2, der mindestens eine Anordnung von zwei oder mehreren Zielen umfasst, von denen jedes auf Eosin Y oder Hämatoxylin reaktiv ist.

4. Objektträger nach einem der Ansprüche 1 bis 3,
wobei das Hämatoxylin-Ziel eine zwei- oder mehrgliedrige Gradientendichtemischung aus Polyphosphorsäure und Polyvinylalkohol ist.

5. Objektträger nach einem der Ansprüche 1 bis 4,
wobei der Objektträger mindestens eine Anordnung von zwei oder mehreren Zielen umfasst, von denen jedes auf einen einzelnen Farbstoff reagiert, der als Teil der Pap-Abstrich-Färbung verwendet wird.

6. Objektträger nach Anspruch 5,
wobei die als Teil der Pap-Abstrich-Färbung verwendeten Farbstoffe Folgendes einschließen: Orange G, Phosphorwolframsäure, Lichtgrün SF oder Echtgrün FCF.

7. Objektträger nach einem der Ansprüche 5 oder 6,
wobei die Ziele, die sich an die als Teil von Pap-Abstrich-Färbung verwendeten Farbstoffe binden, Folgendes einschließen: Natrium-4-hydroxybenzolsulfonat, Isobutanol, Phenolsulfonsäure und p-Toluolsulfonylchlorid.

8. Objektträger nach einem der Ansprüche 1 bis 7,
wobei die Klebebeschichtung kovalent an dem Objektträger befestigt ist und reaktive Endgruppen umfasst, ausgewählt aus der Gruppe bestehend aus Amin, Amid, Carboxyl und Hydroxyl.

9. Objektträger nach einem der Ansprüche 1 bis 8, weiter umfassend einen oder mehrere Bildreferenz-Ladepunkte, wobei die Bildreferenzpunkte vorzugsweise mindestens ein schwarzes Ziel oder ein weißes Ziel einschließen, wobei bevorzugter sowohl schwarze als auch weiße Ziele eingeschlossen sind.

10. Objektträger nach Anspruch 9, wobei das schwarze Referenzziel ausgewählt ist aus Kohlenstoffstaub; wobei die Kohlenstoffzusammensetzung vorzugsweise im Größenbereich von 0,1 bis 2 Mikrometer ist; und/oder
das weiße Referenzziel aus Titanoxid, Aluminiumoxid, Aluminiumsulfat oder Bariumsulfat ausgewählt ist.

11. Objektträger nach einem der Ansprüche 1 bis 10, wobei der Objektträger eine Chargencodenummer umfasst, die direkt unterhalb des Etikettenbereichs auf dem Objektträger aufgetragen ist.

12. Objektträger nach einem der Ansprüche 1 bis 11, wobei der Objektträger ein Markierungsetikett umfasst.

13. Objektträger nach einem der Ansprüche 1 bis 12, wobei der Objektträger einen hydrophilen Sperrring umfasst, um zu verhindern, dass sich die gereinigte Zellaufschlämmung ausbreitet.

14. Verfahren zum Färben eines Objektträgers nach einem der Ansprüche 1 bis 13, umfassend die folgenden Schritte:
b. Auftragen einer Probe auf den Bereich des Objektträgers zum Auftragen eines Gewebeschnitts oder von losen Zellen;
c. Auftragen von einem oder mehreren Farbstoffen auf die Probe und die anorganischen Ziele;
d. Bestimmen der Farbdichte des gefärbten Gewebes oder Zellen quantitativ basierend auf den Zielgradienten und/oder Beurteilen des Färbungsprozesses für Gewebe oder Zellen basierend auf dem Färbungsergebnis der Ziele.

15. Verfahren nach Anspruch 14, wobei die Färbung eine Hämatoxylin-Eosin-Färbung (H&E-Färbung), Pap-Abstrich-Färbung oder beides ist.

16. Verfahren nach Anspruch 15, wobei die für H&E-Färbung verwendeten Farbstoffe Eosin Y und Hämatoxylin sind; und
die für die Pap-Abstrich-Färbung verwendeten Farbstoffe Folgendes einschließen: Orange G, Phosphorwolframsäure, Lichtgrün SF oder Echtgrün FCF.

## Revendications

1. Lame, comprenant
(a) une zone pour l'application de section de tissus ou de cellules libres pour la coloration et l'examen ultérieur ; et U
(b) une zone comprenant un revêtement adhésif adhérant à la lame et une cible inorganique liée de manière covalente au revêtement adhésif,
**caractérisé en ce que** la cible inorganique comprend un mélange d'acide polyphosphorique et d'alcool polyvinylique, de 4-hydroxybenzènesulfonate de sodium, d'hydroquinone, d'isobutanol, d'acide phénolsulfonique ou de chlorure de p-toluène sulfonyle.

2. Lame selon la revendication 1, dans laquelle les cibles inorganiques se lient uniquement aux colorants choisis parmi le groupe consistant en bleu alcian, coloration à l'argent de Bielschowsky, brun de Bismarck, coloration de Gram, violet de crésyl, coloration Fontana-Masson, coloration à l'argent de Gordan et Sweet, SF vert clair, FCF vert rapide, coloration à l'argent à la méthanamine de Grocott, coloration à la bilirubine de Hall, mucicarmine bleu rapide de Luxol, fer colloïdal de Muller-Mowry, nouveau bleu de méthylène, rouge nucléaire rapide, rouge à l'huile D, Orange G, PAS avec digestion à la diastase, acide périodique de Schiff (PAS), acide phosphotungstique, rouge Picro-Sirius, réaction au bleu de Prusse, bleu de Toluidine acidifié, Trichrome de Gomori en une seule étape, colorations Trichrome-Masson, Verhoff-Van Geison, Von Kossa, Fuchsine de résorcine de Weigert et Zeil-Neelsen.

3. Lame selon les revendications 1 et 2, qui comprend au moins un réseau de deux ou plusieurs cibles, dont chacune est réactive à l'éosine Y ou à l'hématoxyline.

4. Lame selon l'une quelconque des revendications 1 à 3,
dans laquelle la cible d'hématoxyline est un mélange de gradient de densité de deux ou plusieurs chaînons d'acide polyphosphorique et d'alcool polyvinylique.

5. Lame selon l'une quelconque des revendications 1 à 4,
dans laquelle la lame comprend au moins un réseau de deux ou plusieurs cibles, dont chacune est réactive à une coloration unique utilisée dans le cadre de la coloration de frottis Pap.

6. Lame selon la revendication 5,
dans laquelle les colorants utilisés dans le cadre de la coloration de frottis Pap incluent : orange G, acide phosphotungstique, SF vert clair ou FCF vert rapide.

7. Lame selon l'une quelconque des revendications 5 ou 6,
dans laquelle les cibles qui se lient aux colorants utilisés dans le cadre de la coloration de frottis Pap incluent : 4-hydroxybenzènesulfonate de sodium, isobutanol, acide phénolsulfonique et chlorure de p-toluène sulfonyle.

8. Lame selon l'une quelconque des revendications 1 à 7,
dans laquelle le revêtement adhésif est fixé de manière covalente à la lame et comprend des groupes terminaux réactifs choisis parmi le groupe consistant en amine, amide, carboxyle et hydroxyle.

9. Lame selon l'une quelconque des revendications 1 à 8, comprenant en outre un ou plusieurs points de chargement de référence d'imagerie, de préférence, les points de référence d'imagerie incluent au moins une cible noire ou une cible blanche, plus préférentiellement, à la fois des cibles noires et blanches sont incluses.

10. Lame selon la revendication 9, dans laquelle la cible de référence noire est choisie parmi la poussière de carbone ; de préférence, le composé carboné présente une taille allant de 0,1 à 2 microns ; et/ou
la cible de référence blanche est choisie parmi oxyde de titane, oxyde d'aluminium, sulfate d'aluminium ou sulfate de baryum.

11. Lame selon l'une quelconque des revendications 1 à 10, dans laquelle la lame comprend un numéro de code de lot appliqué juste en dessous de l'espace d'étiquette sur la lame.

12. Lame selon l'une quelconque des revendications 1 à 11, dans laquelle la lame comprend une étiquette de marquage.

13. Lame selon l'une quelconque des revendications 1 à 12, dans laquelle la lame comprend un anneau de protection hydrophile pour empêcher la boue cellulaire nettoyée de se propager.

14. Procédé pour colorer une lame selon l'une quelconque des revendications 1 à 13, comprenant les étapes suivantes consistant à :
b. appliquer un échantillon sur la zone pour l'application d'une section de tissu ou de cellules libres de la lame ;
c. appliquer un ou plusieurs colorants sur l'échantillon et les cibles inorganiques ;
d. déterminer quantitativement la densité de couleur du tissu ou des cellules colorées sur la base du gradient cible, et/ou évaluer le processus de coloration de tissus ou de cellules sur la base du résultat de coloration des cibles.

15. Procédé selon la revendication 14, dans lequel la coloration est une coloration à l'hématoxyline-éosine (coloration H&E), une coloration de frottis de Pap ou les deux.

16. Procédé selon la revendication 15, dans lequel les colorants utilisés pour la coloration H&E sont l'éosine Y et l'hématoxyline ; et
les colorants utilisés pour la coloration de frottis Pap incluent : orange G, acide phosphotungstique, SF vert clair ou FCF vert rapide.
